# EUROPEAN PATENT APPLICATION

(11) **EP 2 048 820 A2**
(43) Date of publication of application: **15.04.2009**
(21) Application number: 08102672.6
(22) Date of filing: 17.03.2008
(51) Int. Cl.: H04L 12/24

(54) **Method for managing and supervising at least a telecommunication device, MIB database and computer program product for implementing said method**

(30) Priority: 09.10.2007 IT RM20070534
(71) Applicant: Selex Communications S.P.A., 16151 Genova (IT)
(72) Inventor: REFRIGERI, Giancarlo, I-00045, GENZANO DI ROMA (IT)
(74) Representative: Carangelo, Pierluigi

(57) **Abstract**

This document describes a method for the management and remote supervision of at least one telecommunication device (DV1,DV2,DV3) through an SNMP management system (MG) and at least one SNMP management agent (AG_1,AG_2). The method comprises the steps of:
a) providing an MIB database (MB1, MB2) accessible by said SNMP management agent (AG_1, AG_2), including a first subset (C1, C23) of data fields suitable for containing configuration information of said telecommunication device (DV1, DV2, DV3);
b) sending (F1) from said SNMP management system (MG) to said SNMP management agent (AG_1, AG_2) a configuration command signal (sg_1) of said telecommunication device and based upon said configuration command updating corresponding configuration information in said first subset of datafields;
c) transmitting (F4) a signal (Sg_3) from said SNMP management agent (AG_1, AG_2) to said telecommunication device (DV1, DV2, DV3) to carry out said configuration command.

## Description

The present invention concerns the technical field of telecommunications and in particular it refers to a method for the management and supervision of at least one telecommunication device.

In the field of telecommunication networks it is known to use SNMP protocol (acronym for Simple Network Management Protocol) for the management and supervision of telecommunication devices. In particular, SNMP protocol foresees the definition of the following entities:
- the managed object, which is for example a telecommunication device, like for example a router or a switch, in general having an interface manageable through a dedicated protocol;
- a software application known as "management agent", which may or may not have an associated dedicated hardware system that can without distinction be housed on board the device to be managed (for example, in the firmware of such a device) or in an external processing system;
- a management system known as "manager".

In SNMP protocol the management system or "manager" communicates with the Agent. The latter manages the requests, or commands, of the management system and takes care of interfacing with the device to be managed to carry out such requests. An SNMP management agent can be associated with one or more telecommunication devices to be managed, in this last case making a subsystem.

In SNMP protocol the SNMP management system and the SNMP management agent share a data base, known as MIB (acronym for Management Information Base), generally housed at the SNMP management agent, containing information for the management and supervision of the telecommunication devices associated with the management agent.

SNMP protocol has the advantage of allowing the management system to operate in an extensively independent manner from the particular management and supervision procedures actually actuated by the management agent, these being procedures that often depend upon the particular type of device to be managed.

There is a need to devise a method for the remote management and supervision a of telecommunication devices, based upon SNMP protocol, which is particularly flexible, efficient and that provides reliable information relative to the telecommunication devices to be managed.

Such a requirement is satisfied through a management and supervision method as defined in the preamble of the first claim. Other embodiments of the method according to the invention are described in the subsequent claims.

The object of the present invention is also an MIB database and a computer program product as respectively defined in claims 13 and 14.

Further characteristics and advantages of the present invention shall become clearer from the following description of its preferred and not limiting example embodiments, in which:
- figure 1 schematically represents a possible example of network architecture in which a management and supervision method in accordance with the present invention can be used;
- figure 2 schematically represents a possible sequence of steps of a particularly preferred embodiment of a management and supervision method in accordance with the present invention; and
- figure 3 schematically represents a particularly preferred embodiment of the structure of an MIB database able to be advantageously used in the management and supervision method of figure 2.

In the different figures, identical or similar elements shall be indicated with the same reference numerals.

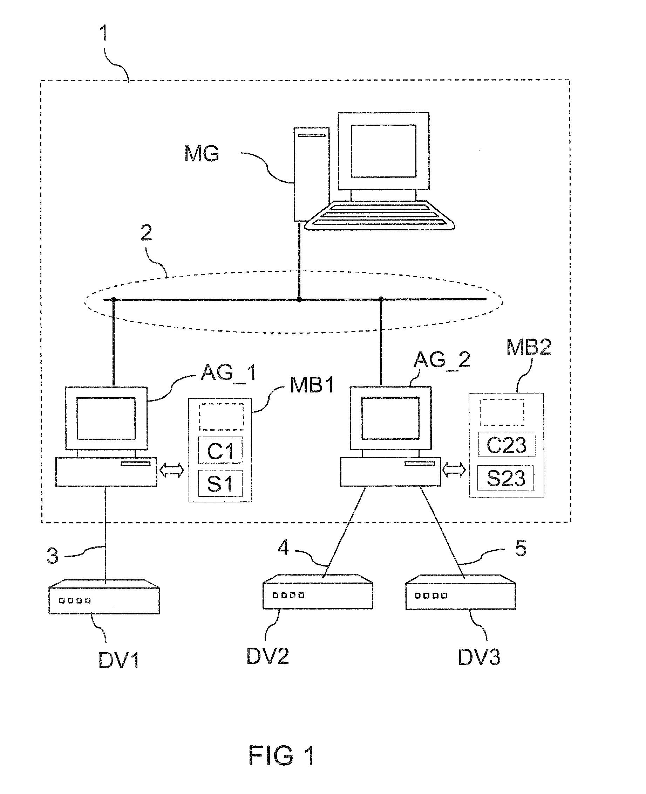

With reference to figure 1, the functional diagram of a network for the management and supervision of at least one telecommunication device has been globally indicated with 1. In the particular example represented in figure 1, the management and supervision network 1 is set up for the management and supervision of three distinct telecommunication devices DV1, DV2, DV3. The telecommunication devices DV1, DV2, DV3 are for example, without for this reason introducing any limitation, radio communication devices. In general, the telecommunication devices DV1, DV2, DV3 can without distinction be of the homogeneous or non-homogeneous type.

The management and supervision network 1 comprises at least one SNMP management system (Simple Network Management Protocol) or "SNMP Manager", indicated in figure 1 with the reference mark MG. Such a management system MG should be taken to mean a remote application that, with or without direct control of a human operator, provides management/configuration commands. The management system MG is generally a software entity executed on a numerical processor, for example on a personal computer or on a server or on a dedicated machine. From now on "management system" MG can without distinction indicate the software application, the numerical processor or the hardware/software combination of the application and the numerical processor suitable for executing such an application.

The management and supervision network 1 also comprises at least one SNMP management agent AG_1, AG_2 or "SNMP Agent" operatively connected to the SNMP management system MG so that it is possible to have a two-way exchange of data between the two entities. In the particular example represented in figure 1, the management and supervision network 1 comprises two distinct SNMP management agents AG_1, AG_2 both operatively connected to the SNMP management system through a telecommunications network 2.

The telecommunications network 2 can without distinction be a network via cable, for example comprising electrical cables or optical fibres, or a wireless network, or a hybrid network comprising any combination of portions of electrical cables and/or portions of optical fibre and/or free space propagation portions. Preferably, such a network is a LAN network (Local Area Network).

In the example, the SNMP management agent AG_1 is set up to execute management/supervision commands given by the SNMP management system MG and concerning the device DV1. For this purpose the SNMP management agent AG_1 is operatively connected to the device DV1, through a connection interface 3 that allows an exchange of data between the management agent AG_1 and the device DV_1. Such a connection interface 3 can be a hardware interface, like for example a physical connection made through a serial cable or USB or any other transmission means, or a software interface, for example in the case in which the management agent AG_1 is in the form of a suitable firmware housed on board processing means foreseen within the same radio device DV1, or any hardware/software combination suitable for allowing the exchange of data between the SNMP management agent AG_1 and the device DV1. It can therefore be worked out how the SNMP management agent AG_1 is in the form of a software application executed on an external processor, like for example a personal computer, or on processing means that are internal or associated with the device DV1. The SNMP agent AG_1 and the radio device DV1 can communicate with each other through a standard protocol or through a proprietary protocol of the radio device DV_1.

Advantageously, the SNMP management agent AG_1 has an associated MIB database MB1 comprising:
- a first subset C1 of data fields suitable for containing configuration information of the telecommunication device DV1;
- a second set S1 of data fields suitable for containing information on the actual configuration status of the device DV1.

Such configuration and status information refers for example to operative parameters of the telecommunication device DV1.

Preferably, the database MB1 is housed at the management agent AG_1. For example, in the case in which the management agent AG_1 is a hardware/software entity remote from the device DV1, the MIB database MB1 is provided in storage means of such an entity.

In the example, in a totally similar way to what has been described with reference to the management agent AG_1, the SNMP management agent AG_2 is set up to execute management/supervision commands given by the SNMP management system MG and concerning the radio communication devices DV2, DV3. Such devices DV2, DV3 are operatively connected to the management agent AG_2 through respective connection interfaces 4, 5. It should be remembered that the devices DV1, DV2 can be controlled and supervised by the management system MG through the SNMP agent AG_2 independently or otherwise from each other.

Advantageously, the SNMP management agent AG_2 has an associated MIB database MB2, preferably housed at said management agent AG_2, comprising:
- a first subset C23 of data fields suitable for containing configuration information of the devices DV2, DV3;
- a second set S23 of data fields suitable for containing information on the actual configuration status of the devices DV2, DV3.

Such configuration and status information refers for example to operative parameters of the devices DV2, DV3 that can be set by the management system MG through the management agent AG_2.

Preferably, the MIB databases MB1, MB2 are each articulated according to a tree-structure comprising at last two branches respectively corresponding to the first C1, C23 and to the second S1, S23 subset of data fields.

The management system MG dialogues with the management agents AG1, AG2 essentially in two ways: it sends SNMP requests (or commands) and it receives SNMP notifications. Some examples of SNMP requests are:
- GET, which is a primitive that allows the management system MG to read one or more pieces of data stored in the MIB databases MB1, MB2;
- GETNEXT which is a primitive that allows the management system MG to repetitively read a sequence of data stored in the MIB databases MB1, MB2;
- GETBULK, which is a primitive that allows the management system MG to read with a single request a large portion of data stored in the MIB databases MB1, MB2;
- SET, used to write (modify) one or more pieces of data stored in the MIB databases MB1, MB2.

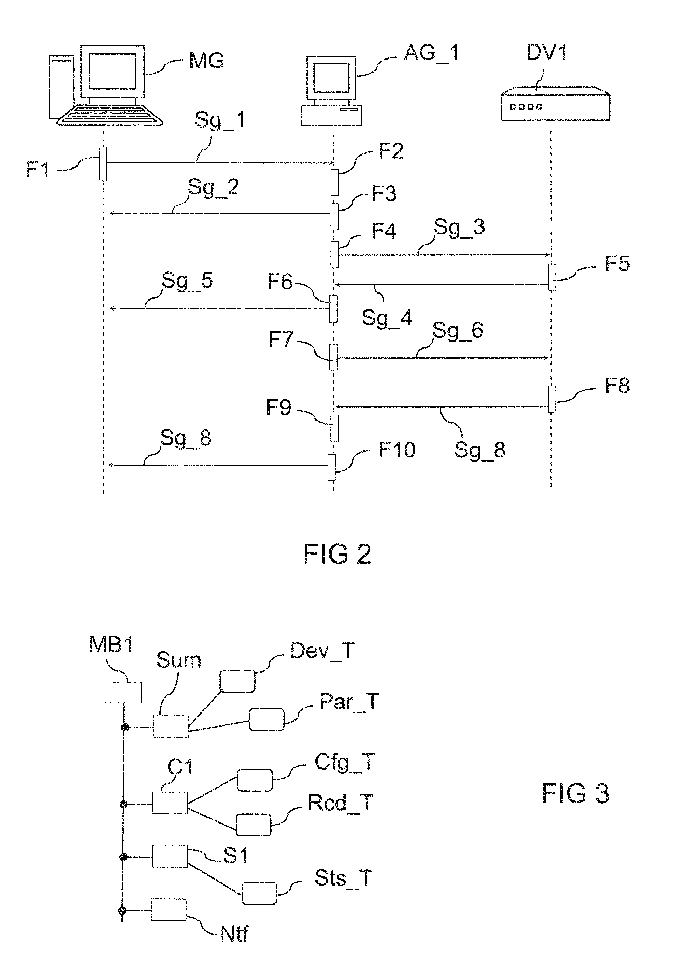

With reference to figure 2 an example of a control and supervision method in accordance with the present invention shall now be described. In particular, an example relative to a configuration request of the device DV1 by the SNMP management system MG shall be described.

The method comprises a first step F1 of sending from the management system MG to the management agent AG_1 a configuration command request through a suitable signal Sg_1. Just to make an example, it can be supposed that through such a signal Sg_1 the management system MG asks the management agent AG_1 to set a parameter like the operative frequency of the radio communication device DV1.

The method comprises a subsequent step F2, executed by the management agent AG_1, of updating a corresponding data field in the first subset C1 of data fields (figure 1) of the database MIB1 in response to the request signal Sg_1.

The method preferably comprises a subsequent step F3, executed by the management agent AG_1, of sending to the management system MG a configuration command delivery notification, through a suitable signal Sg_2.

The method comprises a subsequent step F4, executed by the management agent AG_1, of forwarding the configuration command to the radio communication device DV1, through a suitable signal Sg_3, for example in a proprietary protocol of the radio communication device DV1.

After step F4, the management agent AG_1 preferably waits for a reply signal from the device DV1. More preferably, the method includes a subsequent step F5 of sending from the device DV1 to the management agent AG_1 a signal Sg_4 containing information on the outcome of the configuration command, indicative of a positive or negative outcome of such a command. Preferably, in response to the signal Sg_4 it is also foreseen for there to be a step F6 of transmitting from the management agent AG_1 to the management system MG information on the outcome of the command, for example through an asynchronous SNMP notification (or trap) signal Sg_5. For example, the signal Sg_5 in the case of a positive outcome of the command contains a predetermined return code whereas in the case of a negative outcome of the command it contains an error code.

The management and supervision method of figure 2 also comprises a subsequent step F7 of requesting status information from the SNMP management agent AG_1 to the device DV1, for example through a suitable information request signal Sg_6. Such a request can for example be limited to just the parameter configured by the request Sg_1 of the management system MG or it can concern all of the operative parameters of the device DV1 for which a respective data field is foreseen in the first subset C1 and in the second subset S1 of data fields of the database MIB1.

Advantageously, the management and supervision method comprises a further step F8 of transmitting from the device DV1 to the management agent AG_1 the status information requested in step F7. Such information is for example transmitted through a suitable signal Sg_8 carrying status information of the telecommunication device DV. Such status information can, for example, be limited to just the parameter configured by the request Sg_1 of the management system MG or it can concern all of the operative parameters of the device DV1 for which a respective data field is foreseen in the first subset C1 and in the second S1 subset of data fields of the database MIB1.

As shown in figure 2 the management and supervision method also comprises:
- a subsequent updating step F9 executed by the management agent AG_1 to update based upon the status information received through the signal Sg_8 corresponding status information in the second subset of data fields S1, and advantageously
- a step F10 of sending from the management agent AG_1 to the management system MG the requested and acquired status information. For example, this occurs by sending from the management agent AG_1 a signal Sg_8 carrying status information contained in the second subset of data fields S1 as updated in step F9.

It should be observed that, by operating in the way described, not only is it possible to keep record of the management/supervision commands given by the management system MG but it is also possible to obtain at the management agent AG_1 reliable information on the actual status of the device DV1.

For example, it is advantageously possible to foresee at the management system MG a graphical interface that allows an operator to check in real time whether the status of the device to be managed DV1 does or does not correspond to the management/supervision commands given by the management system. In a particularly advantageous embodiment, it is foreseen for there to be a graphical interface at the management system MG that allows simultaneous display of the configuration information and of the status information respectively contained in the first C1 and in the second S1 subset of data fields of the database MIB1.

Figure 3 schematically represents a particularly preferred embodiment of the structure of an MIB database MB1 advantageously able to be used in a management and supervision method as described above.

The database MIB1 has a tree-structure from which a first subset of data fields SUM preferably branches. Such a subset of data fields SUM preferably comprises:
- a first table Dev_T, or device table, foreseen to contain data identifying the devices DV1 managed by a management agent AG_1 with which the base MB1 is associated,
- a second table Par_T, or parameters table, foreseen to contain for each device managed, codes corresponding to the commands that can be actuated on such a device.

More preferably, the device table Dev_T comprises, for each device managed:
- a first data field suitable for containing a code unequivocally identifying the device (for example "1", , "2",..);
- a second data field suitable for containing a code representing the type of device;
- a third data field suitable for containing the name of the device.

Preferably, the parameters table Par_T comprises for each device managed:
- a first data field suitable for containing the code unequivocally identifying the device (imported from the device table Dev_T),
- a second data field suitable for containing a code representing the type of device (imported from the device table Dev_T),
- a third data field suitable for containing an integer that represents the code of a command able to be actuated on the device managed,
- a fourth data field suitable for containing a string that represents the name of the command.

As shown in figure 3, from the tree-structure of the database MB1 branches a second subset of data fields C1. Such a subset of data fields preferably comprises:
- a first table CFG_T containing the configuration commands;
- a second table RCD_T suitable for containing return codes of the configuration commands.

Preferably, the configuration table Cfg_T comprises, for each device managed:
- a first data field suitable for containing the code unequivocally identifying the device (imported from the device table Dev_T),
- a second data field suitable for containing an integer that represents the code of a command able to be actuated on the device managed,
- a third data field suitable for containing a reading/writing variable that represents the value of a command and that is set by the management system MG.

Preferably, the return code table Rcd_T contains, for each device managed:
- a first data field suitable for containing the code unequivocally identifying the device (imported from the device table Dev_T),
- a second data field suitable for containing a return code of the last command set in the configuration table Cfg_T (for example "Error", or "Command OK").

As shown in figure 3, from the tree-structure of the database MB1 branches a second subset of data fields S1, suitable for containing information on the actual status of each device managed. Such a subset of data fields preferably comprises a status table Sts_T that for each device managed shows status information as received through the signal Sg_8 (Figure 2).

Preferably, the status table Sts_T comprises, for each device managed:
- a first data field suitable for containing the code unequivocally identifying the device (imported from the device table Dev_T),
- a second data field suitable for containing the whole number that represents the code of a command able to be actuated on the device managed (imported from the table Par_T),
- a third data field suitable for containing a reading/writing variable that represents the value of a command as sent by the device managed to the management agent through the signal Sg_8.

As shown in figure 3, from the tree-structure of the database MIB1 preferably branches a further subset Ntf of data fields, suitable for containing information on the asynchronous notifications.

As can be appreciated from what has been described above, a management and supervision method in accordance with the present invention allows the predetermined objectives to be fully reached, ensuring an efficient control of the devices managed thanks to the use of information coming from two distinct entities: on the one hand command/configuration information coming from the management system MG, on the other hand status information coming from the devices managed.

A man skilled in the art, in order to satisfy contingent and specific requirements, can bring numerous modifications and variants to the management and supervision method described above, these modifications and variants all being covered by the scope of protection of the invention as defined by the following claims.

## Claims

**1.** Method for the management and remote supervision of at least one telecommunication device (DV1, DV2, DV3) through an SNMP management system (MG) and at least one SNMP management agent (AG_1, AG_2), the SNMP management system (MG) being able to be operatively connected to the SNMP management agent (AG_1, AG_2) and the SNMP management agent (AG_1, AG_2) being able to be operatively connected to said telecommunication device (DV1, DV2, DV3), the method comprising the steps of:
a) providing an MIB database (MB1, MB2) accessible by said SNMP management agent (AG_1, AG_2), including a first subset (C1, C23) of data fields suitable for containing configuration information of said telecommunication device (DV1, DV2, DV3);
b) sending (F1) from said SNMP management system (MG) to said SNMP management agent (AG_1, AG_2) a configuration command signal (Sg_1) of said telecommunication device and, based upon said configuration command, updating corresponding configuration information in said first subset of data fields;
c) transmitting (F4) a signal (Sg_3) from said SNMP management agent (AG_1, AG_2) to said telecommunication device (DV1, DV2, DV3) for carrying out said configuration command;
**characterised in that**
the MIB database (MB1, MB2) also comprises a second subset of data fields (S1, S23) suitable for containing information on the actual configuration status of said device (DV1, DV2, DV3), the method also comprising after said step c) the following steps:
d) transmitting from said telecommunication device (DV1, DV2, DV3) to said management agent (AG_1, AG_2) a signal (Sg_8) carrying information on the status of said telecommunication device (DV1, DV2, DV3);
e) updating (F9), through said management agent (AG_1,AG_2) and based upon said received status information, corresponding status information in said second subset (S1, S23) of data fields.

**2.** Method according to claim 1, also comprising, between said steps a) and b), a step (F3):
b1) of sending from said SNMP management agent (AG_1, AG_2) to said SNMP management system (MG) a delivery notification signal (Sg_2) of said command.

**3.** Method according to claim 1 or 2, also comprising between said steps c) and d) a step (F5):
c1) of sending from said telecommunication device (DV1, DV2, DV3) to said SNMP management agent (AG_1, AG_2) a signal (Sg_4) containing information on the outcome of said configuration command, indicative of a positive or negative outcome of such a command.

**4.** Method according to claim 3, comprising after said step c1) a step (F6) of:
c2) sending from said SNMP management agent (AG_1, AG_2) to said SNMP management system (MG) a notification signal (Sg_5) containing information on the outcome of said command.

**5.** Method according to claim 5, wherein said notification signal (SG5) sent in step c2) is an asynchronous notification signal.

**6.** Method according to any one of the previous claims, also including between said steps c) and d) a step (F7) of transmitting a status information request signal (Sg_6) from said SNMP management agent (AG_1, AG_2) to said telecommunication device (DV1, DV2, DV3).

**7.** Method according to claim 6, wherein said step (F7) of transmitting said status information request signal (Sg_6) is carried out after said step c1), only if said signal (Sg_4) sent in said step c1) contains information indicating a positive outcome of such a command.

**8.** Method according to any one of the previous claims, also including, after said updating step e) (F9), a step of sending from said SNMP management agent to said SNMP management system (MG) a signal (Sg_8) containing status information of said telecommunication device (DV1,DV2,DV3).

**9.** Method according to any one of the previous claims, also comprising a step of providing at said management system (MG) said information contained in said first (C1, C23) and said second (S1, S23) data subset of the MIB database.

**10.** Method according to claim 9, also comprising a step of displaying in real time and simultaneously at said management system (MG) said information contained in said first and said second data subset of the MIB database.

**12.** Method according to claim 10, wherein said information is displayed on two distinct portions of the same display so as to make it easy for them to be compared by an operator.

**13.** MIB database (MB1, MB2), for the management of at least one telecommunication device (DV1, DV2,DV3) by an SNMP management system (MG) through an SNMP management agent (AG_1, AG_2), said base comprising a first subset (C1, C23) of data fields suitable for containing configuration information of said telecommunication device (DV1, DV2, DV3), said information being able to be stored in said first subset of data fields based upon signals sent from said system to said agent,
**characterised in that** it also comprises a second subset of data fields (S1, S23) suitable for containing information on the actual configuration status of said device (DV1, DV2, DV3), said information being able to be stored in said second subset of data fields based upon signals sent from device to said agent.

**14.** Computer program product comprising software code portions suitable for being loaded in the memory of a processor to carry out a method in accordance with any one of claims 1 to 12.
